(19) Europäisches Patentamt
European Patent Office
Office européen des brevets

(11) **EP 2 882 090 A1**

(12) **EUROPEAN PATENT APPLICATION**

(43) Date of publication:
**10.06.2015 Bulletin 2015/24**

(51) Int Cl.:
*H02M 7/5387* (2007.01)  *H02M 1/12* (2006.01)
*H02M 7/5388* (2007.01)

(21) Application number: **13195827.4**

(22) Date of filing: **05.12.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **ABB Oy**
**00380 Helsinki (FI)**

(72) Inventors:
• **Li, Tin-Ho**
**10015 Beijing (CN)**

• **Ho, Ngai-Man**
**5405 Baden-Daettwil (CH)**
• **Bradshaw, Jonathan**
**5405 Baden-Daettwil (CH)**
• **Huusari, Juha**
**5405 Baden-Daettwil (CH)**

(74) Representative: **Kolster Oy Ab**
**Iso Roobertinkatu 23**
**PO Box 148**
**00121 Helsinki (FI)**

(54) **Single-phase fullbridge inverter with switchable output filter**

(57) A single-phase full bridge inverter comprising an input voltage DC link for receiving DC voltage, two series connections of controllable semiconductor switches ($S_1$, $S_2$; $S_3$, $S_4$), and an output filter. The output filter comprises first and second inductors ($L_1$, $L_2$) having a first end and a second end, which first ends of the first and second inductors form the input connections of the output filter and the second ends of the first and second inductors form the output connections of the output filter, at least one filter capacitor ($C_1$, $C_2$), and first and second filter switches ($S_5$, $S_6$), wherein the first filter switch ($S_5$) is adapted to connect the second end (51) of the first inductor ($L_1$) to the input voltage DC link through the at least one capacitor ($C_1$), and the second filter switch ($S_6$) is adapted to connect the second (52) end of the second inductor ($L_1$) to the input voltage DC link through the at least one capacitor ($C_2$).

FIG 5

EP 2 882 090 A1

**Description**

FIELD OF THE INVENTION

The present invention relates to inverters, and more particularly to single-phase full-bridge inverters.

BACKGROUND OF THE INVENTION

A full-bridge (FB) inverter with a unipolar switching scheme (USS) is a popular combination in single-phase grid connected photovoltaic (PV) applications because of the high power efficiency, simple circuitry, easy control and reasonable component count. With the same switching frequency, both the switching loss and the inductor loss for a USS are smaller than those in a bipolar switching scheme (BSS), and thus a higher inverter efficiency is ensured.

Efficient energy conversion is very important in PV applications, for example, as it implies that more solar energy can be transformed into electricity. Users benefit directly from such efficiency in the form of savings in electricity costs. However, the high switching frequency ground leakage current issue is a drawback to the combination of a full-bridge inverter with a unipolar switching scheme in connection with PV panels [2] to [5]. The leakage current is harmful to the health and life time of PV panels. Moreover, the leakage current can trigger the grid-fault protection randomly and cause a failure accidentally.

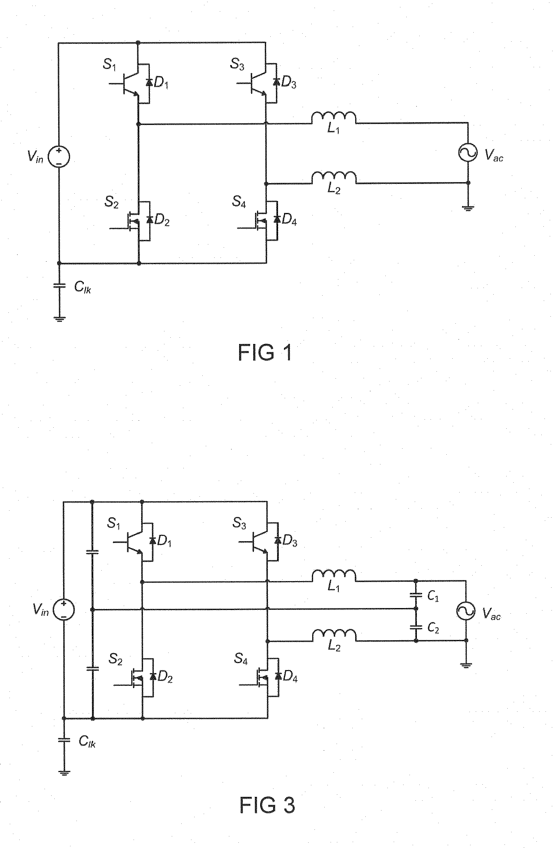

Figure 1 shows a circuit schematic of a full bridge inverter. In such an inverter, two pairs of series-connected switch components $S_1$, $S_2$; $S_3$, $S_4$ with anti-parallel diodes are connected across input voltage $V_{in}$. Inductors $L_1$, $L_2$ are connected to the midpoints between the semiconductor components, and the other ends of the inductors provide output voltage. In Figure 1, an output of the inverter is connected directly to a voltage grid $V_{ac}$ for supplying power to the grid. Figure 1 also shows a ground capacitance $C_{lk}$, from an input voltage source, such as a PV panel.

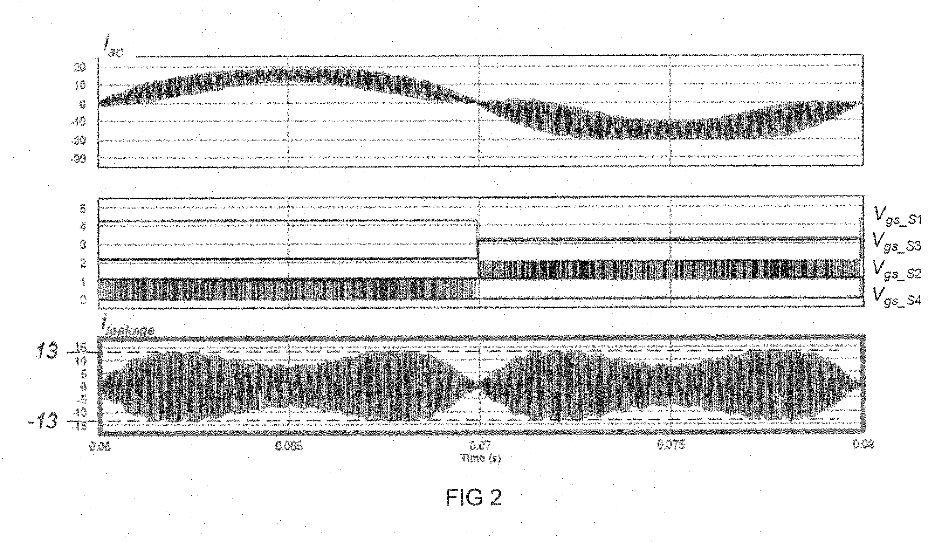

Figure 2 shows simulation results of the single-phase FB inverter of Figure 1 with unipolar switching with the following component parameters: $L_1 = L_2 = 800$ uH, $C_{lk} = 200$ nF, $V_{in} = 400$ V, $V_{ac} = 230$V / 50Hz, and with a switching frequency $f_{sw}$ of 16 kHz.

The first subplot of Figure 2 shows an output current waveform and the second subplot shows gate signals to the switch components. As is known, in the unipolar switching scheme only one switch component is modulated in each half-wave of the output voltage. Figure 2 shows how, in a positive half-wave, $V_{gs\_S1}$ is high, and $V_{gs\_S2}$ and $V_{gs\_S3}$ are low, while $V_{gs\_S4}$ is modulated. The signals $V_{gs}$ are gate signals applied to the gates of the corresponding components. In a negative half-wave, the switch $S_3$ is kept conducting and the switches $S_1$ and $S_4$ are kept blocking while $S_2$ is modulated.

A large leakage current, as shown in the third subplot of Figure 2, is flowing in this circuit, and the peak value of this current is about 13 A. This high a leakage current in harmful to the PV panel and thus has to be minimized.

Different methods have been proposed in order to reduce or eliminate the leakage current. In general, the methods can be classified into four categories. The first category is a strict forward solution, involving cascading common mode (CM) filters until the leakage current is small enough to meet the specifications. This is a simple solution but the filter, especially the inductor(s), is costly and lossy.

The second category is based on the output filter design of the inverter, such as an FB inverter with a connection between the middle points of output filter capacitors and the inverter input capacitors [10] in order to reduce the CM voltage across the leakage capacitor of the PV panels. This is an effective solution for suppressing the leakage current but it does not fully utilize the output inductors, the utilization is only 50%. In other words, 50% more inductance is needed to meet the required output current ripple with respect to the one with no middle point connection.

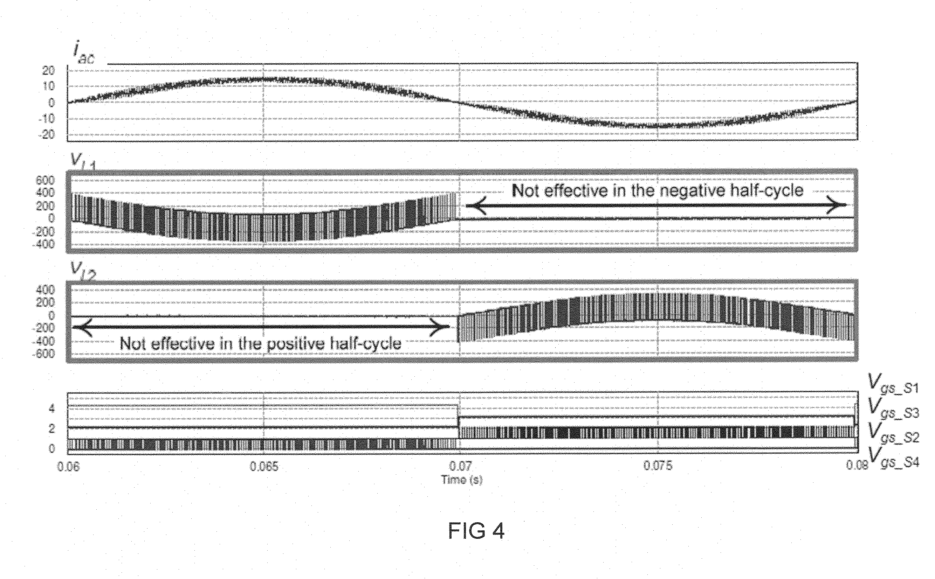

Figure 3 shows the circuit schematic given in [10], and Figure 4 shows the corresponding simulation results with a USS. It can be seen that a bridge output voltage is fully applied to $L_1$ in a positive half-cycle and to $L_2$ in a negative half-cycle. It means that only one of the two inductors is able to respond to the bridge output voltage for suppressing the ripple current to the AC grid. Therefore, the utilization of the output filter inductors is only 50%.

The third category is to reconfigure the inverter operation by using additional active switch(es) such as H5 [7], H6 type [6] and HERIC [8] in order to electrically isolate the AC grid from the PV panels. Mainly, the idea is to break the path of the leakage current between the PV panel and the AC grid during a freewheeling state. Therefore, the leakage current can be reduced and even eliminated theoretically. The proposed methods effectively tackle the leakage current issue, but the drawback is that more semiconductor devices have to be installed in the main power path. The increase in the number of components leads to increased costs and losses of the system.

The last category involves making the neutral of the AC grid and a reference terminal, normally the negative terminal or the middle point of input capacitors, of the PV panel to be of the same voltage potential [1], [9]. No voltage change can occur in the leakage capacitor and thus no leakage current can be induced. This is an effective way to suppress the leakage current but high voltage rating semiconductors, a relatively low power efficiency, high circuit complexity, and thus high costs, are the drawbacks.

BRIEF DESCRIPTION OF THE INVENTION

An object of the present invention is to provide an inverter circuit so as to solve the above problems. The objects of the invention are achieved by an inverter circuit which is characterized by what is stated in the independent claim. Preferred embodiments of the invention are disclosed in the dependent claims.

The invention is based on a full bridge inverter with full utilization of output inductors. The inverter of the invention comprises an output filter that can be reconfigured using two additional switches which are switching at line frequency. The output filter comprises at least one capacitor and inductors connected to the output of the inverter. The formed filter is an LCL filter having a strong attenuation to the differential mode switching frequency component of the current to the AC grid.

Due to the LCL filter, the size of the inductors and EMI filters can be reduced. The leakage current is also highly suppressed due to the low impedance paths provided by the capacitor. Moreover, the benefits of low switching losses provided by the unipolar switching scheme are retained. In addition, no extra semiconductor is connected in series in the current conducting path during energy transfer. Therefore, additional conduction loss of the inverter is avoided. The inverter circuit of the present invention can achieve a high power efficiency, small output current ripple and low leakage current with a small size of inductors.

BRIEF DESCRIPTION OF THE DRAWINGS

In the following, the invention will be described in greater detail by means of the preferred embodiments and with reference to the accompanying drawings, in which

Figure 1 shows a single-phase full bridge inverter;
Figure 2 shows simulation results of the inverter shown in Figure 1;
Figure 3 shows a prior art inverter structure;
Figure 4 shows simulation results of the circuit of Figure 3;
Figure 5 shows an embodiment of the present invention;
Figure 6 shows operating modes of the proposed inverter in a positive half-line cycle (a) energy transfer stage and (b) freewheeling stage;
Figure 7 shows line frequency equivalent circuits of (a) the present invention and (b) the inverter of Figure 3;
Figure 8 shows high frequency equivalent circuits of (a) the inverter of the present invention and (b) the inverter of Figure 3;
Figure 9 shows simulation results using the inverter of Figure 3;
Figure 10 shows simulation results using the present invention; and
Figures 11 to 18 show different embodiments of the invention.

DETAILED DESCRIPTION OF THE INVENTION

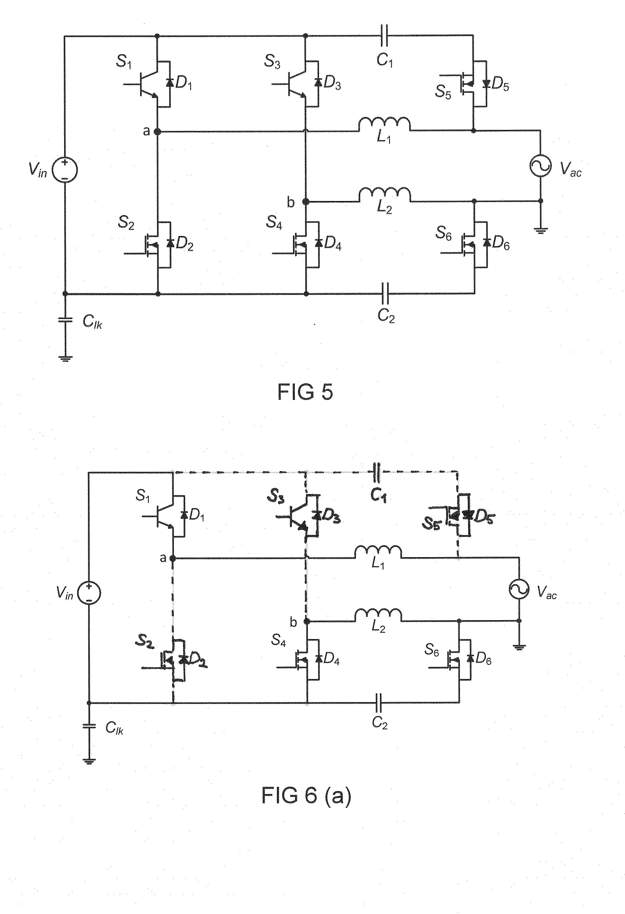

Figure 5 shows a circuit diagram of an embodiment of the present invention. The inverter of the invention comprises an input voltage DC link for receiving DC voltage. In Figure 5, a voltage source $V_{in}$ is connected to the DC link for supplying voltage to the inverter. In the circuit of the invention, a full-bridge inverter is formed of two series connections of controllable semiconductor switches $S_1, S_2, S_3, S_4$, each semiconductor switch comprising an anti-parallel diode $D_1, D_2, D_3, D_4$. The series connections of the switches are connected in parallel and to the input voltage DC link. The output of the bridge is formed of points a, b between the series-connected switches.

The inverter of the invention further comprises an output filter having input connections and output connections. The input connections are connected between the series connected semiconductor switches. As seen from Figure 5, the output filter is connected to points a, b. The output connections of the filter form the output of the inverter.

The output filter comprises first and second inductors $L_1, L_2$. The inductors have first and second ends. The first ends form the input connections of the output filter. The second ends of the inductors form the output connections of the output filter which is also the output of the inverter.

The inverter of the embodiment further comprises at least one capacitor $C_1, C_2$ having a first and a second terminal and first and second filter switches $S_5, S_6$. In the embodiment of Figure 5, the inverter comprises two filter capacitors $C_1, C_2$. The first filter switch $S_5$ is connected between the second end of the first inductor $L_1$ and the first terminal of the first capacitor $C_1$. The second filter switch $S_6$ is connected between the second end of the second inductor $L_2$ and the first terminal of the second capacitor $C_2$.

The second ends of the first and second capacitors $C_1, C_2$ are connected to the input voltage DC link. As can be seen in Figure 5, the second end of the first filter capacitor $C_1$ is connected to a positive terminal of the input DC link. Similarly, the second end of the second filter capacitor $C_2$ is connected to a negative terminal of the input DC link.

According to an embodiment, the second switch $S_6$ is adapted to be controlled conductive during the positive half-cycle of the inverter output current and the first switch $S_5$ is adapted to be controlled conductive during the negative half-cycle of the inverter output current.

The principle of the inverter of the invention is to use at least one additional capacitor and two additional line frequency switches to reconfigure the output L filter of the full bridge inverter into an LCL filter in each half-line cycle actively. This LCL filter provides high attenuation to the switching frequency component of the AC grid current. Because of the high attenuation, 60dB/decade, of the LCL filter, the inductance of the output inductors $L_1$, $L_2$ can be much smaller than the conventional L filter or inverter with a middle point connection of Figure 3 for reaching the same level of ripple current. Also, the at least one capacitor provides a low impedance path to the leakage current and thus the leakage current can be reduced effectively.

In the following, the inverter of the invention is analysed with respect to line frequency operation and high frequency operation. The operation is compared with the solution of the middle point connection from the output capacitors to the input of the inverter as shown in Figure 3. The line frequency analysis shows that nearly no difference exists in the power flow control between the proposed inverter and the topology shown in Figure 3. Therefore, no sophisticated control is required. The high frequency analysis is to explain how the proposed inverter topology can suppress the leakage current and configure the output filter into an LCL structure actively.

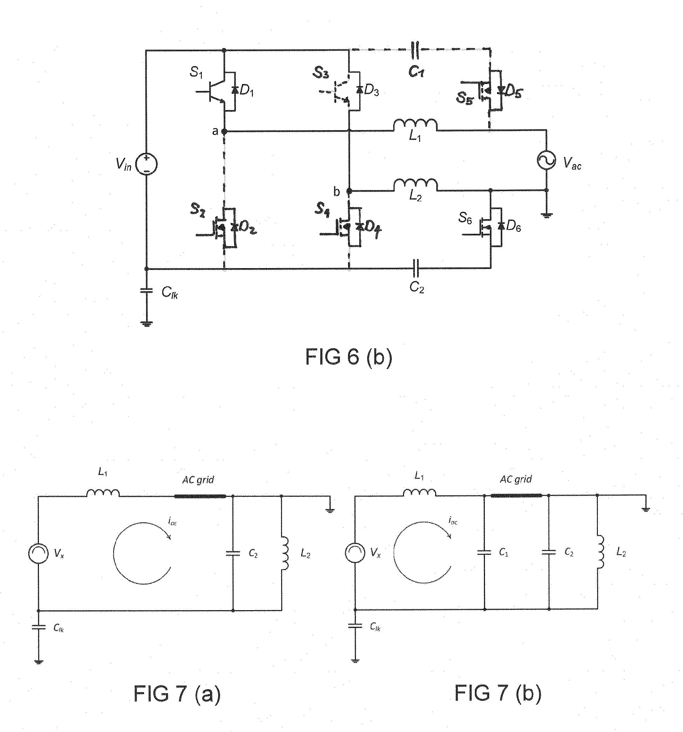

Figures 6 (a) and (b) show the operating modes of the inverter of an embodiment in the positive half-cycle. In Figure 6 (a) the inverter is in an energy transfer stage and current is flowing from the input voltage source through the switch $S_1$ and the inductor $L_1$ to a load $V_{ac}$, which in the example of Figure 6 (a) is an AC voltage grid. The current returns through the inductor $L_2$ and the switch $S_4$ to the negative link of the input voltage source. The switch $S_6$ is also controlled conductive. However, the capacitor $C_2$ in series with the switch $S_6$ blocks the current path so that no load current flows through the switch $S_6$.

Figure 6 (b) shows the operation of the inverter in a free-wheeling state. The current is pushed by the inductors $L_1$ and $L_2$, and it flows through the diode $D_3$ as the switch $S_4$ is in the blocking state. The current is now looped in a loop consisting of the switch $S_1$, the inductors $L_1$, $L_2$, the load and the diode $D_3$. As in connection with Figure 6 (b), the switch $S_6$ is conductive, but the line frequency current is not flowing through the switch $S_6$ due to the capacitor $C_2$.

The scenario for the negative half-cycle is the same and thus will not be discussed herein.

Figure 7 (a) shows a line frequency equivalent circuit of the inverter of the present invention. For the sake of comparison, Figure 7 (b) shows the corresponding equivalent circuit for the inverter with a middle point connection (Figure 3) in the positive half-line cycle. $V_x$ is the voltage difference of the line frequency component between the output of the bridge circuit and the AC grid.

When considering $C_1 = C_2 = C$ and $L_1 = L_2 = L$ and calculating the impedances of the circuits, it can be seen that the line frequency impedance of the present invention is

$$Z = \frac{2j\omega L - j\omega^2 L^2 C}{1 - \omega^2 LC}$$

while the corresponding impedance of the circuit of Figure 7 (b) is

$$Z_{mid} = \frac{2j\omega L}{1 - \omega^2 LC}.$$

As the second term of the numerator in the impedance formula of the present invention is close to zero, the line frequency impedances can be considered equal, and therefore the inverter of the present invention performs almost similarly with respect to line frequency differential mode and common mode currents.

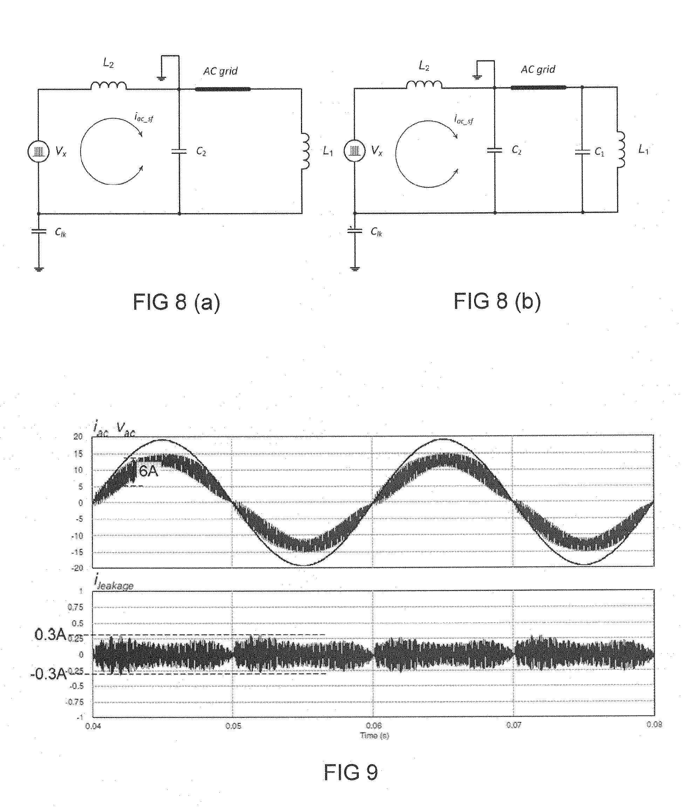

Figures 8 (a) and 8 (b) show a high frequency equivalent circuit of the inverter of the invention and the inverter with a middle point connection (Figure 3), respectively. The filter of the proposed inverter is configured as an LCL filter which provides 60dB/decade attenuation to the switching frequency component. However, in the case of the inverter with a middle point connection, the impedance of the path $C_1 // L_1$ is very small with respect to the switching frequency component. Assuming $C = C_1 = C_2$, the current ripple on $L_2$, that is the switching frequency current ripple $i_{ac\_sf}$, is roughly equally shared by $C_1$ and $C_2$ and thus the current ripple effective on the grid is roughly equal to half the current ripple of $i_{ac-sf}$.

The difference of the switching frequency current ripple magnitude between the two topologies can be determined based on the impedance ratio.

Assuming the amplitude of a current ripple is the same for both circuits, and setting $L = L_1 = L_2$ and $C = C_1 = C_2$, $\Delta i_{ac}$ and $\Delta i_{ac\_mid}$ being the magnitude of the output current ripple of the present inverter topology and the one with a middle point connection, respectively, whereby the impedance ratio then is

$$\frac{\Delta i_{ac}}{\Delta i_{ac\_mid}} = \left| \frac{\left[ 1 - \omega^2 L \left( 2C + C_{lk} \right) \right] \left( 1 - \omega^2 L C_{lk} \right)}{\left[ 1 - \omega^2 L \left( C + C_{lk} \right) \right]^2} \right|$$

where $C_{lk}$ is the leakage capacitance.

From the above equation, it can be determined that the ratio of the ripple current amplitude is dependent on the switching frequency and the value of L and C. As an example with switching frequency equals 16 kHz, L, C and $C_{lk}$ equal 800 $\mu$H, 2.2 $\mu$F and 200 nF, respectively. The ripple current amplitude of the proposed inverter is about 15 times smaller than that of the inverter with a middle point connection. It shows that the proposed inverter is very effective in suppressing the current ripple on the AC grid side. The above calculations are also verified with the following simulations:

Case 1: With a middle point connection (the inverter of Figure 3)
$L_1$ and $L_2$ equal 800 $\mu$H,
$C_1$ and $C_2$ equal 2.2 $\mu$F

Case 2: With the inverter of the invention
$L_1$ and $L_2$ equal 800 $\mu$H,
$C_1$ and $C_2$ equal 2.2 $\mu$F.

For both of the above cases, the power is about 2.1 kW, input voltage of the inverter is 400 V and AC grid voltage is 230 Vrms. The line impedance LL and LN equal 20uH and RL and RN = 2.5 m$\Omega$. The leakage capacitance of the panel, $C_{lk}$, equals 200 nF.

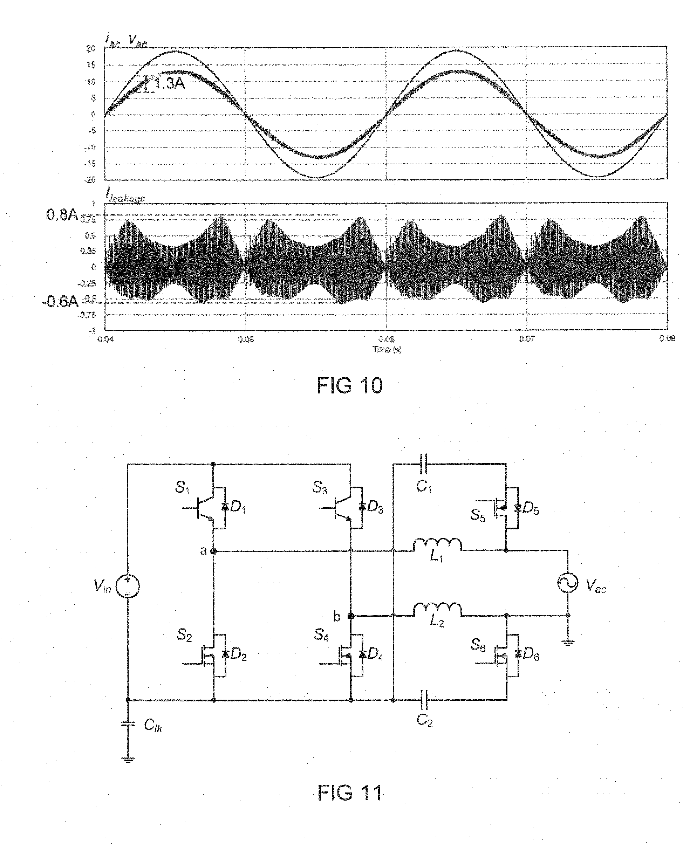

Figures 9 and 10 show simulation results of Cases 1 and 2, respectively. The amplitude of the leakage current and current ripple on the AC grid for the inverter with a middle point connection are about 0.6 A and 6 A, respectively. Similarly, for the inverter of the invention, the currents are about 1.4 A and 1.3 A, respectively. It shows that the current ripple of the AC grid current is significantly suppressed. The difference of the current ripple between the two cases is less than 15 times because of the presence of the line impedance which cannot be eliminated.

In order to obtain the same level of current ripple as that with the inverter of the invention using inverter with a middle point connection, the inductance of the output inductors would have to be increased to 4000 uH.

As mentioned above, the filter switches $S_5$ and $S_6$ are not in the main current path of the inverter. It can also be determined that the voltage rating of the switches is low compared with that of the switches of the inverter circuit.

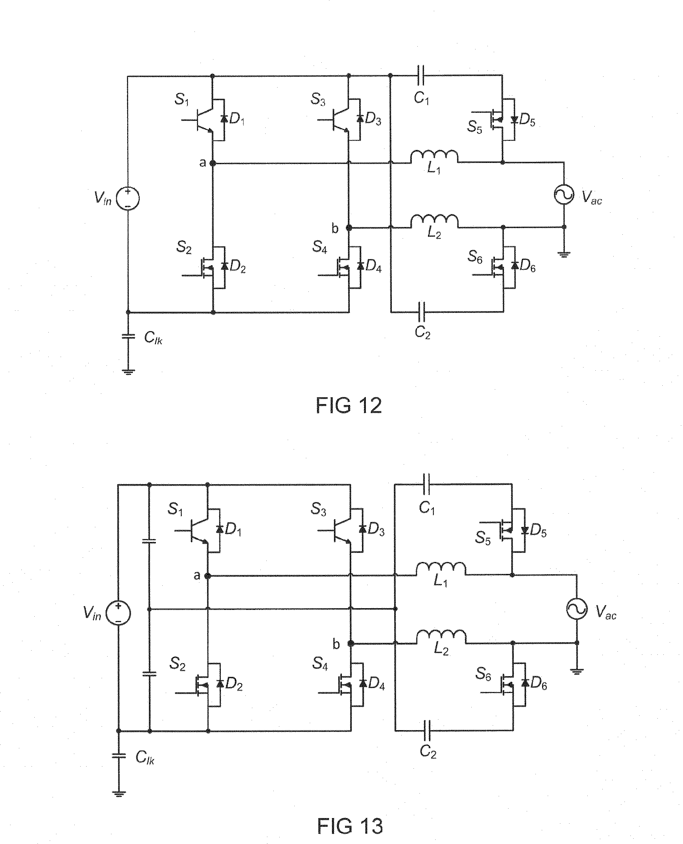

Figures 11, 12, and 13 show different embodiments of the invention. In the embodiment of Figures 11 to 13, the inverter comprises first and second capacitors $C_1$ and $C_2$, and the embodiments differ in their connection of the second end of the capacitors. Otherwise the embodiments correspond to that of Figure 5. Specifically in Figure 11, the second ends of the capacitors are connected to the negative terminal of the input voltage DC link. In Figure 12, the second ends of the capacitors $C_1$ and $C_2$ are connected to the positive terminal of the input voltage DC link. In Figure 13, the input voltage DC link is split using a series connection of additional capacitors connected across the input voltage DC link. The second ends of the capacitors $C_1$ and $C_2$ are connected to the middle point of the input voltage DC link formed between the additional capacitors. The electrical operation of each of the embodiments corresponds to that of Figure 5.

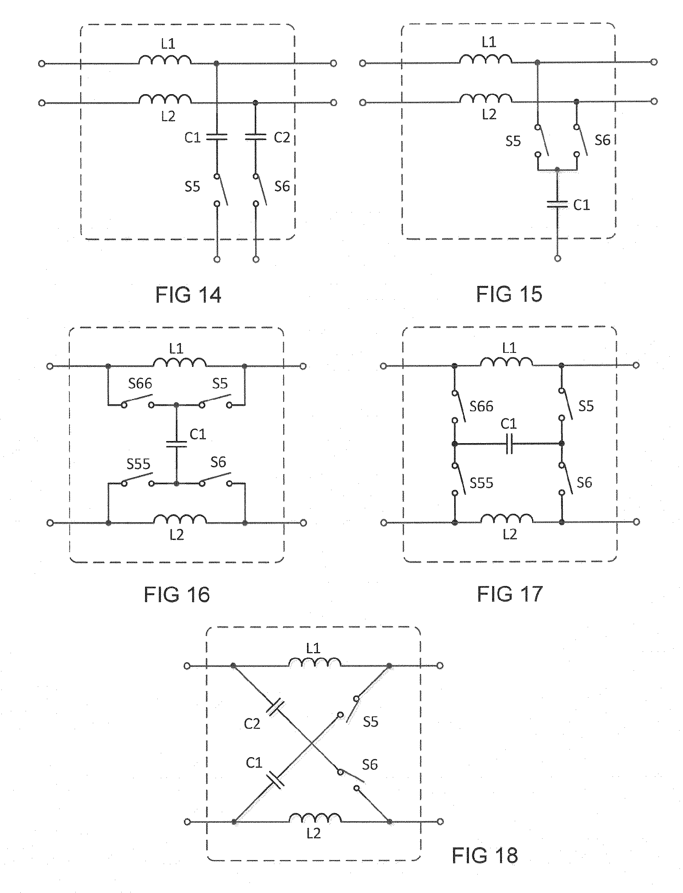

Figures 14 to 18 show further embodiments of the invention. More specifically, Figures 14 to 18 show active filter structures. Figure 14 shows a structure in which two filter capacitors and two filter switches are employed. The switches are able to connect the second ends of the inductors through the capacitors to the input voltage DC link (not shown). In the embodiment of Figure 15, two switches are employed with only one filter capacitor. As only one of the switches is operated at a time, the operation of the embodiment corresponds to one with two capacitors. In the embodiment, the second ends of the inductors are connected through the capacitor to a potential of the input voltage DC link.

In the embodiment of Figure 16, the inverter structure comprises four filter switches $S_5$, $S_6$, $S_{55}$, $S_{66}$ and one filter capacitor $C_1$. In this embodiment, the switches $S_5$ and $S_{55}$ are operated simultaneously for connecting the capacitor between the second end of the first inductor to a potential of the input voltage DC link. In the embodiment, the second end of the first inductor is connected through the capacitor to the first end of the second inductor $L_2$. The first end of the second inductor is connected to the input voltage DC link through the modulating switches $S_4$ and $S_3$ as seen in Figures 6 (a) and 6 (b). Similarly, when the switches $S_6$ and $S_{66}$ are conducting during a positive half-cycle, the switches connect the second end of the second inductor through the capacitor to point a of Figures 6 (a) and 6 (b) and through the conducting switches to the input voltage DC link.

The embodiment of Figure 17 also employs four filter switches and a single capacitor. As in the embodiment of Figure 16, the switches $S_6$ and $S_{66}$ are operated at the same time during the positive half-cycle, and the filter capacitor is connected similarly through the switch components of the inverter bridge to the input voltage DC link. Further, the switches $S_6$ and $S_{66}$ are operated at the same time for connecting the filter capacitor to the second end of the second inductor $L_2$ and to the input voltage DC link.

The embodiment of Figure 18 comprises two filter switches and two filter capacitors. The switches connect the capacitors from the second end of one of the inductors to the first end of the other inductor. The high frequency current path through the capacitors is formed through the switches of the inverter as in the embodiments of Figures 16 and 17.

The control for the filter switches may be obtained from the same source as for the inverter switches when unipolar switching is employed. The filter switch $S_6$ (and $S_{66}$) is controlled conductive at the same time intervals as the switch $S_1$ of the inverter switch, that is when positive voltage is applied to the load. Similarly, the filter switch $S_5$ (and $S_{55}$) is controlled conductive during the negative half-wave, i.e. when the switch $S_3$ of the inverter bridge is in a conducting state.

The inverter of the present invention is suitable for applications in need of high power efficiency, high output current quality and low leakage current, such as a single-phase grid-connected transformerless PV inverter and inverters of UPS devices.

It will be obvious to a person skilled in the art that as technology advances, the inventive concept can be implemented in various ways. The invention and its embodiments are not limited to the examples described above but may vary within the scope of the claims.

[1] J. M. Shen, H. L. Jou and J. C. Wu, "Novel Transformerless Grid-Connected Power Converter with Negative Grounding for Photovoltaic Generation System," IEEE Trans Power Electron., vol. 27, no. 4, pp. 1818-1829, April 2012

[2] R. Teodorescu, M. Liserre and P. Rodriguez, Grid Converters for Photovoltaic and Wind Power System. UK: John Wiley & Sons Ltd., 2011

[3] M. Bouzguenda, T. Salmi, A. Gastli and A. Masmoudi, "Assessment of Topologies to Minimize Leakage Current in Transformerless PV Inverters," in Proc. IEEE Energy Conference and Exhibition. Dec. 2010

[4] O. Lopez, R. Teodorescu, F. Freijedo and J. d. Gandoy, "Leakage current evaluation of a single-phase transformerless PV inverter connected to the grid," in Proc. IEEE Applied Power Electronics Conference (APEC), pp. 907-912, March 2007

[5] L. Ma, F. Tang, F. Zhou, X. Jin and Y. Tong, "Leakage current analysis of a single-phase transformer-less PV inverter connected to the grid," in Proc. IEEE International Conference on Sustainable Energy Technologies (ICEST), pp. 285-289, Nov. 2008

[6] W. Yu, J. S. Lai, H. Qian, and C. Hutchens, "High-Efficiency MOSFET Inverter with H6- Type Configuration for Photovoltaic Nonisolated AC-Module Applications, IEEE Trans Power Electron., vol.26, no. 4, pp. 1253-1260, April 2011

[7] Victor et al., "Method of Converting a Direct Current Voltage from a Source of Direct Current Voltage, more Specifically from a Photovoltaic Source of Direct Current Voltage, into a Alternating Current Voltage," US 7,411,802 B2, Aug. 12, 2008

[8] Schmidt et al., "DC/AC Converter to Convert Direct Electric Voltage into Alternating voltage or into Alternating Current," US 7,046,534 B2, May 16,2006

[9] Zacharias et al., "Inverter," US 7,813,153 B2, Oct 12, 2010

[10] D. Dong, X. Zhang, F. Luo, D. Boroyevich and P. Mattavelli, "Common-Mode EMI Noise Reduction for Grid-interface Converter in Low-voltage DC Distribution System," in Proc IEEE Applied Power Electronics Conference (APEC), pp. 451-457, March 2012

**Claims**

1. A single-phase full bridge inverter comprising
   an input voltage DC link for receiving DC voltage,
   two series connections of controllable semiconductor switches ($S_1$, $S_2$; $S_3$, $S_4$), each semiconductor switch comprising an anti-parallel diode ($D_1$, $D_2$, $D_3$, $D_4$), wherein the series connections are connected in parallel and to the input voltage DC link, and

an output filter, **characterized in that**

the output filter comprises input connections and output connections, the input connections being connected between the series-connected semiconductor switches (a, b) and the output connections forming an output of the inverter, wherein the output filter comprises

first and second inductors ($L_1$, $L_2$) having a first end and a second end, which first ends of the first and second inductors form the input connections of the output filter and the second ends of the first and second inductors form the output connections of the output filter,

at least one filter capacitor ($C_1$, $C_2$), and

first and second filter switches ($S_5$, $S_6$), wherein

the first filter switch ($S_5$) is adapted to connect the second end (51) of the first inductor ($L_1$) to the input voltage DC link through the at least one capacitor ($C_1$), and

the second filter switch ($S_6$) is adapted to connect the second (52) end of the second inductor ($L_1$) to the input voltage DC link through the at least one capacitor ($C_2$).

2. An inverter according to claim 1, wherein

the first filter switch ($S_5$) and the second filter switch ($S_6$) are adapted to be controlled conductive in an alternating manner and in synchronization with a single-phase AC power grid to which the inverter is adapted to feed power.

3. An inverter according to claim 1 or 2, wherein

the second filter switch ($S_6$) is adapted to be controlled conductive during a positive half-cycle of the inverter output current, and

the first filter switch ($S_5$) is adapted to be controlled conductive during a negative half-cycle of the inverter output current.

4. An inverter according to claim 1, 2 or 3, wherein

the first filter switch ($S_5$) is connected between the second end of the first inductor ($L_1$) and a first terminal of the at least one capacitor ($C_1$),

the second filter switch ($S_6$) is connected between the second end of the second inductor ($L_2$) and the first terminal of the at least one capacitor ($C_1$), and

a second terminal of the at least one capacitor is connected to the input voltage DC link.

5. An inverter according to any of the preceding claims 1 to 4, wherein the input voltage DC link to which the second terminal of the at least one capacitor is connected comprises a positive DC link potential, a negative DC link potential or a middle point of the DC link potential.

6. An inverter according to any of the preceding claims 1 to 5, wherein the at least one capacitor is connected to the input voltage link through a semiconductor switch ($S_1$, $S_2$, $S_3$, $S_4$) to the input voltage DC link.

7. An inverter according to any of the preceding claims 1 to 6, wherein the inverter comprises a filter capacitor ($C_1$) and the filter switches ($S_5$, $S_6$) are adapted to connect the second ends of the inductors ($L_1$, $L_2$) to the same filter capacitor.

8. An inverter according to any of the preceding claims 1 to 6, wherein the inverter comprises two first and two second filter switches ($S_5$, $S_{55}$; $S_6$, $S_{66}$), the two first filter switches ($S_5$, $S_{55}$) being adapted to connect a filter capacitor ($C_1$) between the second end of the first inductor ($L_1$) and the first end of the second inductor ($L_2$) and the two second filter switches ($S_6$, $S_{66}$) being adapted to connect the filter capacitor ($C_1$) between the second end of the second inductor ($L_2$) and the first end of the first inductor ($L_1$).

9. An inverter according to any of the preceding claims 1 to 6, wherein the first filter switch ($S_5$) is adapted to connect a first capacitor ($C_1$) between the second end of the first inductor ($L_1$) and the first end of the second inductor ($L_2$) and the second filter ($S_6$) is adapted to connect the second filter capacitor ($C_2$) between the second end of the second inductor ($L_2$) and the first end of the first inductor ($L_1$).

FIG 1

FIG 3

FIG 5

FIG 6 (a)

FIG 6 (b)

FIG 7 (a)                    FIG 7 (b)

FIG 8 (a)                    FIG 8 (b)

FIG 9

FIG 10

FIG 11

## FIG 12

## FIG 13

FIG 14

FIG 15

FIG 16

FIG 17

FIG 18

FIG 2

EP 2 882 090 A1

FIG 4

EP 2 882 090 A1

Europäisches Patentamt

European Patent Office

Office européen des brevets

## EUROPEAN SEARCH REPORT

Application Number

EP 13 19 5827

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 568 592 A1 (HUAWEI TECH CO LTD [CN]) 13 March 2013 (2013-03-13) | 1-3,5,6 | INV. H02M7/5387 H02M1/12 H02M7/5388 |
| A | * figures 3A, 3B, 3C, 3D * * paragraphs [0002], [0007], [0042], [0046], [0104] - [0110] * | 4,7,8 | |
| X | US 2009/256543 A1 (YANG TA-YUNG [TW]) 15 October 2009 (2009-10-15) * figure 2 * * paragraphs [0020], [0022], [0023] * | 1,4-9 | |
| A | EP 1 643 626 A2 (MATSUSHITA ELECTRIC IND CO LTD [JP]) 5 April 2006 (2006-04-05) * figure 12 * | 1-9 | |
| A | CN 102 340 258 A (JIANGSU JINFAN POWER TECHNOLOGY CO LTD) 1 February 2012 (2012-02-01) * figure 1 * | 1-9 | |
| A | EP 2 584 692 A2 (DIEHL AKO STIFTUNG GMBH & CO [DE]) 24 April 2013 (2013-04-24) * figures 4,5,7,8,9 * | 1-9 | TECHNICAL FIELDS SEARCHED (IPC) H02M H02J |

The present search report has been drawn up for all claims

| Place of search | Date of completion of the search | Examiner |
|---|---|---|
| The Hague | 15 May 2014 | Kail, Maximilian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 13 19 5827

This annex lists the patent family members relating to the patent documents cited in the above-mentioned European search report.
The members are as contained in the European Patent Office EDP file on
The European Patent Office is in no way liable for these particulars which are merely given for the purpose of information.

15-05-2014

| Patent document cited in search report | | Publication date | Patent family member(s) | | Publication date |
|---|---|---|---|---|---|
| EP 2568592 | A1 | 13-03-2013 | AU 2012254901 A1 | | 02-05-2013 |
| | | | CN 102437765 A | | 02-05-2012 |
| | | | EP 2568592 A1 | | 13-03-2013 |
| | | | JP 2013529457 A | | 18-07-2013 |
| | | | US 2013114321 A1 | | 09-05-2013 |
| | | | WO 2012163235 A1 | | 06-12-2012 |
| US 2009256543 | A1 | 15-10-2009 | CN 101604913 A | | 16-12-2009 |
| | | | CN 103354418 A | | 16-10-2013 |
| | | | TW 200944980 A | | 01-11-2009 |
| | | | US 2009256543 A1 | | 15-10-2009 |
| EP 1643626 | A2 | 05-04-2006 | EP 1643626 A2 | | 05-04-2006 |
| | | | JP 4706349 B2 | | 22-06-2011 |
| | | | JP 2006121890 A | | 11-05-2006 |
| CN 102340258 | A | 01-02-2012 | NONE | | |
| EP 2584692 | A2 | 24-04-2013 | DE 102011116593 A1 | | 25-04-2013 |
| | | | EP 2584692 A2 | | 24-04-2013 |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 7411802 B2
- US 7046534 B2
- US 7813153 B2

### Non-patent literature cited in the description

- **J. M. SHEN ; H. L. JOU ; J. C. WU.** Novel Transformerless Grid-Connected Power Converter with Negative Grounding for Photovoltaic Generation System. *IEEE Trans Power Electron.,* April 2012, vol. 27 (4), 1818-1829
- **R. TEODORESCU ; M. LISERRE ; P. RODRIGUEZ.** Grid Converters for Photovoltaic and Wind Power System. John Wiley & Sons Ltd, 2011
- **M. BOUZGUENDA ; T. SALMI ; A. GASTLI ; A. MASMOUDI.** Assessment of Topologies to Minimize Leakage Current in Transformerless PV Inverters. *Proc. IEEE Energy Conference and Exhibition.,* December 2010
- **O. LOPEZ ; R. TEODORESCU ; F. FREIJEDO ; J. D. GANDOY.** Leakage current evaluation of a single-phase transformerless PV inverter connected to the grid. *Proc. IEEE Applied Power Electronics Conference (APEC,* March 2007, 907-912
- **L. MA ; F. TANG ; F. ZHOU ; X. JIN ; Y. TONG.** Leakage current analysis of a single-phase transformer-less PV inverter connected to the grid. *Proc. IEEE International Conference on Sustainable Energy Technologies (ICEST,* November 2008, 285-289
- **W. YU ; J. S. LAI ; H. QIAN ; C. HUTCHENS.** High-Efficiency MOSFET Inverter with H6- Type Configuration for Photovoltaic Nonisolated AC-Module Applications. *IEEE Trans Power Electron.,* April 2011, vol. 26 (4), 1253-1260
- **D. DONG ; X. ZHANG ; F. LUO ; D. BOROYEVICH ; P. MATTAVELLI.** Common-Mode EMI Noise Reduction for Grid-interface Converter in Low-voltage DC Distribution System. *Proc IEEE Applied Power Electronics Conference (APEC,* March 2012, 451-457